Europäisches Patentamt

(19) European Patent Office

Office européen des brevets

(11) Veröffentlichungsnummer : **0 319 039 B1**

(12) **EUROPÄISCHE PATENTSCHRIFT**

(45) Veröffentlichungstag der Patentschrift :
02.10.91 Patentblatt 91/40

(51) Int. Cl.⁵ : **B66C 9/08**, B66C 9/14,
F16C 13/00

(21) Anmeldenummer : 88120175.0

(22) Anmeldetag : 02.12.88

(54) **Radblock.**

Teilanmeldung 90117595.0 eingereicht am 02/12/88.

(30) Priorität : 04.12.87 DE 3741193

(43) Veröffentlichungstag der Anmeldung :
07.06.89 Patentblatt 89/23

(45) Bekanntmachung des Hinweises auf die
Patenterteilung :
02.10.91 Patentblatt 91/40

(84) Benannte Vertragsstaaten :
AT BE DE FR GB

(56) Entgegenhaltungen :
DE-A- 2 319 187
DE-C- 325 091
FR-A- 1 213 950
GB-A- 2 052 014
GB-A- 2 104 857

(73) Patentinhaber : MAN GHH LOGISTICS GMBH
Austrasse 52
W-7100 Heilbronn (DE)

(72) Erfinder : Bröring, Wolfgang
Dahlienstrasse 44
W-8011 Poing (DE)
Erfinder : Gleixner, Franz
Waxensteinstrasse 23
W-8000 München 70 (DE)
Erfinder : Gschlössl, Georg
Hohenlindner Strasse 36
W-8016 Feldkirchen (DE)
Erfinder : Häring, Elmar
Julius-Kreis-Strasse 37
W-8000 München 60 (DE)
Erfinder : Kleinert, Bolko
Beckmanns Stege 8
W-4235 Schermbeck-Damm (DE)
Erfinder : Lehmann, Peter
Kranzhornweg 9
W-8015 Markt Schwaben (DE)
Erfinder : Schulz, Hartmut
Hubertusstrasse 22 d
W-8209 Stephanskirchen (DE)
Erfinder : Wagner, Gerhard, Dr.
Von-der-Recke-Strasse 105
W-5802 Wetter 2 (DE)

(74) Vertreter : Liska, Horst, Dr. et al
Patentanwälte H. Weickmann, Dr. K. Fincke,
F.A. Weickmann, B. Huber, Dr. H. Liska, Dr. J.
Prechtel Möhlstrasse 22 Postfach 86 08 20
W-8000 München 86 (DE)

## Beschreibung

Die Erfindung betrifft einen Radblock mit einem aus mehreren fest miteinander verbundenen, insbesondere verschweißten Blechformteilen zusammengesetzten Gehäuse, dessen einander gegenüberliegende Seitenwände in das Gehäuseinnere vorstehende, ringzylindrische Lageransätze bilden und mit einem die Lageransätze axial überlappenden, über Wälzlager an den Lageransätzen drehbar gelagerten Laufrad, welches über die Wälzlager in dem Gehäuse axial fixiert ist.

Ein Radblock dieser Art ist aus der DE-PS 3134750 bekannt. Sein Gehäuse besteht aus zwei aus Blech gepreßten Schalen, die in der Längsmittelebene des Gehäuses miteinander verschweißt sind. Das Laufrad hat eine Hohlnabe, die einteilig mit einem Laufradkranz über eine Radscheibe verbunden ist. Die mit einer Innenverzahnung für die Kupplung mit einem Antrieb versehene Hohlnabe bildet Achszapfen, die in die Lageransätze des Gehäuses eingreifen und dort mittels Wälzlager drehbar gelagert sind. Die axiale Fixierung erfolgt einerseits über Ringschultern an den Achszapfen und den Lageransätzen und andererseits über zusätzliche an den Achszapfen angebrachte Sicherungsringe. Bei dem bekannten Radblock ist der Herstellungsaufwand für das Laufrad und dessen axiale Fixierung vergleichsweise groß.

Aus der DE-OS 2319187 ist ein weiterer Radblock bekannt, bei welchem das von einem Gehäuse umschlossene Laufrad an Steckachsen gelagert ist, die von gegenüberliegenden Seiten des Gehäuses her in Lageröffnungen des Laufrads eingreifen und das Laufrad über Wälzlager tragen. Bei den Steckachsen handelt es sich um vom Gehäuse gesondert hergestellte und an diesem angeschraubte Bauelemente. Zwischen den Steckachsen hat das Laufrad einen scheibenförmigen, mit einer Innenverzahnung für den Eingriff einer Antriebswelle versehenen Mittelsteg. Auch bei diesem Radblock ist der Konstruktionsaufwand für das Laufrad und insbesondere für die Steckachsen vergleichsweise groß.

Der Erfindung liegt die Aufgabe zugrunde, den Konstruktionsaufwand für das Laufrad und dessen Lagerung bei einem Antriebs-Radblock zu verringern.

Diese Aufgabe wird durch die im Kennzeichen des Anspruchs 1 angegebenen Merkmale gelöst. Bei dem erfindungsgemäßen Radblock greifen die Lageransätze in die Nabenöffnung des Laufrads ein. Die Nabenöffnung hat im wesentlichen zylindrische Gestalt und nimmt zwei Ringschalen auf, die die äußeren Sitzflächen für die beiden Wälzlager bildet, mit welchen das Laufrad an den Lageransätzen des Gehäuses gelagert ist. Die Ringschalen stehen für die Antriebsverbindung zwischen den beiden Wälzlagern nach radial innen vor. Ein solches Laufrad hat im wesentlichen die Gestalt einer Hülse, die gegebenenfalls an ihren Stirnenden mit Spurkränzen versehen ist und sich dementsprechend mit geringem Fertigungsaufwand herstellen läßt. Bei den Ringschalen handelt es sich bevorzugt um einteilige und damit ebenfalls einfach herstellbare Blechformteile oder bei größeren Radblöcken auch um Gußteile, z.B. aus Sphäroguß oder um Gesenkschmiedeteile. Für die axiale Fixierung sind keine zusätzlichen Komponenten erforderlich. Die Wälzlager werden zwischen einander entgegengerichteten Ringschultern des Laufrads oder der Ringschalen einerseits und der Lageransätze andererseits axial geführt. Der erfindungsgemäße Radblock eignet sich insbesondere für kleine Laufrad-Durchmesser und kann bei geeigneter Gestaltung das auf den Fahrantrieb wirkende Rutschmoment beim Anfahren an einen Anschlag reduzieren.

Die Ringschalen sind bevorzugt mit einem verhältnismäßig geringem Reibschluß in die Lageröffnung eingesetzt, so daß sich im Betrieb eine Rutschkupplungsfunktion ergibt, wenn das über den Radblock angetriebene Fahrwerk, beispielsweise eines Krans, gegen einen Endpuffer oder dergleichen fährt, bevor der Antriebsmotor zum Stehen kommt, was insbesondere bei schnellaufenden Motoren der Fall sein kann. Da der Außendurchmesser der Ringschale kleiner ist als der Laufraddurchmesser ist sichergestellt, daß der Antriebsmotor mit einem kleineren Bremsmoment beaufschlagt wird, als es durch die Reibung des Laufrads auf der Schiene sich ergeben würde. Da das über die Ringschalen auf das Laufrad wirkende Gewicht im Einzelfall ein für die Übertragung des Antriebsmoments ausreichendes Reibmoment erzeugen kann, können die Ringschalen gegebenenfalls auch lose in die Nabenöffnung eingesetzt sein, so daß sich der vorstehend erwähnte Reibschluß zwischen Ringschale und Laufrad erst durch die Betriebsbelastung des Radblocks ergibt.

Bei dem Laufrad des aus der DE-PS 3134750 bekannten Radblocks handelt es sich um ein vergleichsweise kompliziertes Gußformteil, bei welchem die Laufflächenbereiche und die Spurkranzbereiche aus demselben Material bestehen. Es hat sich gezeigt, daß die Forderung ausreichender Verschleißfestigkeit harter Laufradmaterialien zu Lasten von Notlaufeigenschaften des Laufrads gehen.

Eine Ausgestaltung der Erfindung befaßt sich mit der Vereinfachung der Herstellung des Laufrads und insbesondere dem Problem, einen Radblock zu schaffen, dessen Laufrad nicht nur verschleißfest ist, sondern auch Notlaufeigenschaften, insbesondere für den Fall von Schräglauffehlern des Fahrwerks hat.

Bei diesem Radblock sitzen die Wälzlager wiederum in einer durchgehenden Nabenöffnung des axial beiderseits seines Laufflächenrings Spurkränze bildenden Laufrads.

Das Laufrad besteht aus einem Zylinderrohrabschnitt und zwei an dessen Stirnenden befestigten Ringscheiben, die die Spurkränze bilden. Bei den Komponenten des Laufrads handelt es sich um einfach herstellbare Teile, wobei die Ringscheiben beispielsweise aus einem vorzugsweise gehärteten Stahl und der Zylinderrohrabschnitt zumindest an seinem Außenumfang aus einem Material mit Notlaufeigenschaft besteht. Beispielsweise kann der Zylinderrohrabschnitt an seiner Oberfläche mit Kunststoff ummantelt sein, was zusätzlich den Vorteil der Minderung von Laufgeräuschen bietet. Ein geeignetes Kunststoffmaterial ist beispielsweise Polyamid mit einem Gehalt an $MoS_2$. Der Zylinderrohrabschnitt kann auch vollständig aus Metall mit Notlaufeigenschaften, wie zum Beispiel aus Kugelgraphitguß (Sphäroguß, zum Beispiel GGG-60) bestehen. Die Ringscheiben und der Zylinderrohrabschnitt können miteinander verklebt, verschweißt oder auch nur zusammengespannt sein.

Im folgenden werden Ausführungsbeispiele der Erfindung anhand einer Zeichnung näher erläutert. Hierbei zeigt :

Fig. 1     einen Radblock für ein auf Schienen laufendes Laufwerk zum Beispiel eines Krans oder einer verfahrbaren Plattform oder dergleichen ;

Fig. 2     eine Schnittansicht des Radblocks gesehen entlang einer Linie II-II in Fig. 1 und

Fig. 3     eine Schnittansicht durch eine Variante eines bei dem Radblock der Fig. 1 und 2 verwendbaren Laufrads.

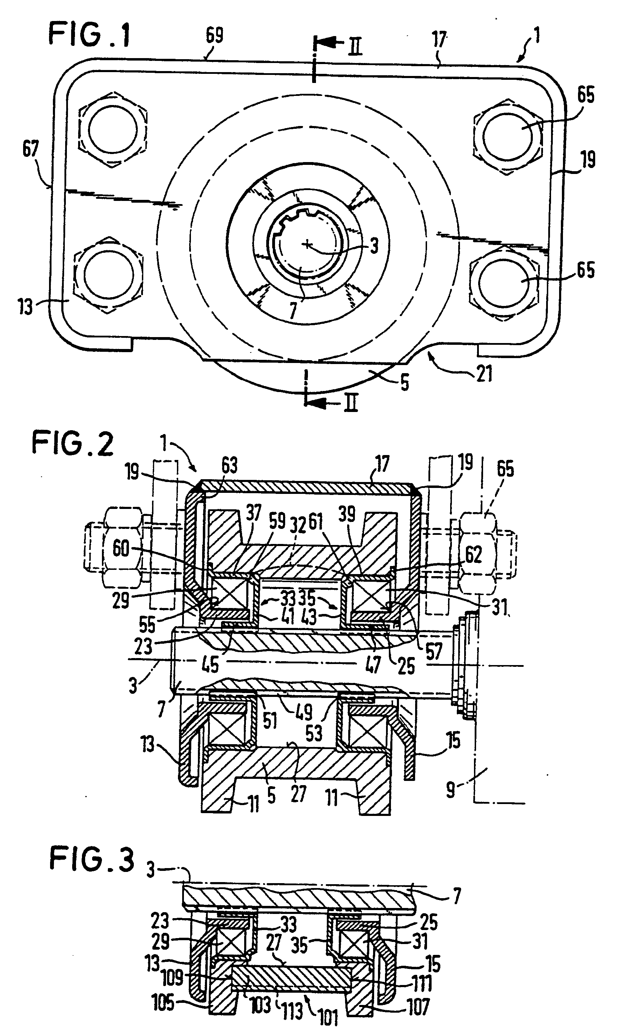

Die Fig. 1 und 2 zeigen einen Antriebs-Radblock für ein zum Beispiel für einen Kran geeignetes Fahrwerk oder dergleichen mit einem rechteck-quaderförmigen Gehäuse 1, in welchem ein um eine Drehachse 3 drehbar gelagertes Laufrad 5 angeordnet ist. Das Laufrad 5 ist mit einer Abtriebswelle 7 eines nicht näher dargestellten Laufradantriebs 9 gekuppelt und hat zur Führung auf einer nicht näher dargestellten Laufschiene an seinen Stirnseiten Spurkränze 11.

Das Gehäuse 1 ist aus zwei im wesentlichen rechteckförmigen Seitenwandscheiben 13, 15 und einem im wesentlichen U-förmigen Umfangswandteil 17 zusammengesetzt, welches entlang seiner Längsränder durch Schweißnähte 19 mit den Rändern der Seitenwandscheiben 13, 15 fest verbunden ist. Das Umfangswandteil 17 besteht zur Erhöhung der Festigkeit des Gehäuses 1 aus einem vorzugsweise dickeren Blech als die Seitenwandscheiben 13, 15 und greift unter Belassung einer Austrittsöffnung 21 für das Laufrad 5 auf zumindest einer Stirnseite des Gehäuses 1 um die stirnseitigen Ecken der Seitenwandscheiben 13, 15 herum, wobei der umgreifende Teil des Umfangswandteils 17 auch an den unteren Rändern der Seitenwandscheiben 13, 15 angeschweißt ist.

An den Seitenwandscheiben 13, 15 sind in das Gehäuseinnere ragende ringzylindrische Lageransätze 23, 25 einteilig angeformt, die in eine axial durchgehende, zumindest im Bereich ihrer Enden zylindrische Lageröffnung 27 des Laufrads 5 eingreifen. Das Laufrad 5 umschließt damit die Lageransätze 23, 25 und ist über Wälzlagern 29, 31 an den Lageransätzen der Seitenwandscheiben 13, 15 sowohl radial als auch axial geführt. Zur Vereinfachung seiner Herstellung kann die Lageröffnung 27 zwischen den Wälzlagern 29, 31 nach radial außen hin eingezogen sein, wie dies bei 32 angedeutet ist.

Die Wälzlager 29, 31 sitzen mit ihrem Außenring in als Blechformteil ausgebildeten Ringschalen 33, 35. Die Ring schalen 33, 35 haben einen reibschlüssig in der Nabenöffnung 27 des Laufrads 5 sitzenden, rohrzylindrischen Hülsenabschnitt 37 bzw. 39, von dem axial zwischen den Wälzlagern 29, 31 ein ringscheibenförmiger Flanschabschnitt 41 bzw. 43 nach radial innen absteht. Von den Flanschabschnitten 41, 43 stehen weitere Hülsenabschnitte 45 bzw. 47 gleichsinnig zu den Hülsenabschnitten 43 bzw. 39 ab. Die Hülsenabschnitte 45, 47 sind zur Bildung einer in eine Außenverzahnung 49 der Antriebswelle 7 drehfest eingreifenden Innenverzahnung 51 bzw. 53 in Umfangsrichtung gewellt und übertragen das Antriebsdrehmoment der Antriebswelle 7 auf das Laufrad 5. Um einen vergleichsweise großen axialen Abstand zwischen den Innenverzahnungen 51, 53 der beiden Ringschalen 33, 35 zu erzielen, greifen die Hülsenabschnitte 45, 47 in die Lageransätze 23, 25 ein.

Das Laufrad 5 wird über die Wälzlager 29, 31 an dem Gehäuse 1 radial fixiert. Im Fußbereich der Lageransätze 23, 25 sind hierzu an den Innenringen der Wälzlager 29, 31 anliegende, nach innen aufeinander zu weisende Ringschultern 55 bzw. 57 angeformt. Entgegengerichtete Ringschultern 59 bzw. 61 sind an den Kehlbereichen am Übergang der Hülsenabschnitte 37, 39 in die Flanschabschnitte 41, 43 in Form von Ringtreppen an den Ringschalen 33, 35 angeformt. Die Ringtreppen sorgen zugleich für ausreichenden Freiabstand zwischen den innenliegenden Enden der Lageransätze 23, 25 von den Flanschabschnitten 41, 43. Die Ringschalen 33, 35 stützen sich jeweils mit einem Ringbund 60 bzw. 62 an den axialen Stirnseiten des Laufrads 5 ab. Der Ringbund 60 bzw. 62 ist an dem vom Flanschabschnitt 41 bzw. 43 abgewandten Stirnende des Hülsenabschnitts 37 bzw. 39 nach radial außen abgebogen.

Der Radblock besteht aus einigen wenigen, einfach insbesondere als Blechformteil herstellbaren Bauteilen. Axiale Toleranzen der Laufradlagerung können beim Zusammenbau des Gehäuses 1 ausgeglichen werden. Wenigstens eine der beiden Seitenwandscheiben 13, 15, vorzugsweise jedoch beide, haben, wie in Fig. 2 dargestellt ist, einen umlaufend in das Gehäuseinnere gebogenen Rand 63, der mit der Flachseite des Umfangswandteils 17 überlappt. Der abgebogene Rand 63 steift einerseits die Seitenwandscheibe aus, erlaubt aber andererseits auch die axiale Justierung der Seitenwandscheiben 13, 15 relativ zueinander und damit beim Zusammenbau einen Ausgleich des axialen Lagerspiels.

Die Befestigung des Radblocks kann, wie dies bei 65 angedeutet ist, durch mehrere Schraubbolzen erfolgen, die sich in nicht näher dargestellten Stützrohren quer durch die Seitenwandscheiben 13, 15 erstrecken. Insbesondere in Ausführungsformen, bei welchen das Umfangswandteil 17 aus einem dickeren Blech gefertigt ist als die Seitenwandscheiben 13, 15, läßt sich der Radblock jedoch auch an einer Stirnseite 67 oder einer Längsseite 69 unmittelbar über das Umfangswandteil 17 befestigen.

Der zwischen den Hülsenabschnitten 37, 39 der Ringschalen 33, 35 und dem Laufrad 5 vorgesehene Reibschluß ist so bemessen, daß das von den Ringschalen 33, 35 auf das Laufrad 5 übertragbare Drehmoment kleiner ist, als das durch die Reibung des Laufrads 5 auf die Laufschiene übertragene Drehmoment. Insbesondere bei einem Antrieb 9 mit schnellaufendem Motor kann die Situation eintreten, daß der Motor beim Auffahren des Fahrwerks auf einem Endanschlagspuffer nicht rasch genug abgebremst werden kann. Aufgrund des Rutschkupplungseffekts werden Schäden an den Antriebsorganen des Antriebs 9 verhindert. Der Rutschkupplungseffekt tritt auch bei gleichen Reibpaarungen zwischen Laufrad und Schiene einerseits und Laufrad und Ringschalen andererseits auf, da der Durchmesser der Ringschalen kleiner ist als der Lauffflächendurchmesser des Laufrads 5. Für die Erzeugung des Reibmoments zwischen den Ringschalen 33, 35 und dem Laufrad 5 genügt unter Umständen die durch die Belastung durch die Radkraft erzeugte Reibkraft, so daß die Ringschalen 33, 35 im unbelasteten Zustand auch lose in der Lageröffnung 27 des Laufrads 5 sitzen können.

Fig. 3 zeigt eine Variante eines in dem Radblock der Fig. 1 und 2 verwendbaren Laufrads 101, das sich von dem Laufrad 5 der Fig. 1 und 2 durch verbesserte Laufeigenschaften unterscheidet. Das Laufrad 101 ist aus einem Zylinderrohrabschnitt 103 und zwei an die Stirnenden des Zylinderrohrabschnitts 103 anschließenden Ringscheiben 105, 107 zusammengesetzt. Die Stirnenden des Zylinderrohrabschnitts 103 greifen in Ringnuten 109 bzw. 111 an den Seitenflächen der Ringscheiben 105, 107 ein, wobei die Ringscheiben 105, 107 radial außen über den Zylinderrohrabschnitt 103 überstehen und Spurkränze des Laufrads 101 bilden. Die Ringscheiben 105, 107 sind an dem Zylinderrohrabschnitt 103 angeklebt, angeschweißt oder beispielsweise durch Schrauben angespannt.

Während die Ringscheiben 105, 107 aus vorzugsweise gehärtetem Stahl bestehen, besteht der Zylinderrohrabschnitt 103 aus einem Material mit Notlaufeigenschaften, zum Beispiel Kugelgraphitguß (GGG-60). Die Notlaufeigenschaften dieses Materials mindern den bei eventuellen Schräglauffehlern des Kranfahrwerks auftretenden Verschleiß.

Alternativ kann der Zylinderrohrabschnitt auch aus einem Material ohne ausgeprägte Notlaufeigenschaften bestehen und auf seiner Lauffläche mit einem Material mit Notlaufeigenschaften beschichtet sein. Beispielsweise kann, wie in Fig. 3 bei 113 angedeutet ist, der Außenumfang des Zylinderrohrabschnitts 103 mit einem Kunststoffmantel ummantelt sein. Der Kunststoffmantel kann aus Polyamid mit einem Gehalt $MoS_2$ bestehen und hat den zusätzlichen Vorteil, daß er Fahrgeräusche mindert.

Nicht näher dargestellt ist eine Variante des Laufrads 101, bei welcher die Ringschalen 33, 35 jeweils integral an den Ringscheiben 105, 107 angeformt sind. Die Hülsenabschnitte 37, 39 der Ausführungsform nach Fig. 2 sind hierbei integraler Bestandteil der Ringscheiben 105, 107. Diese Variante hat insbesondere fertigungstechnische Vorteile, da die Ringscheiben 105, 107 ohnehin gesondert von dem Zylinderrohrabschnitt 103 gefertigt werden müssen.

Das Laufrad 101 kann auch bei anderen Radblöcken, Krankopfträgern und Fahrwerken als dem Radblock der Fig. 1 und 2 eingesetzt werden, insbesondere auch bei nicht angetriebenen Radblöcken.

**Patentansprüche**

1. Radblock mit einem aus mehreren fest miteinander verbundenen, insbesondere verschweißten Blechformteilen (13, 15, 17) zusammengesetzten Gehäuse (1), dessen einander gegenüberliegende Seitenwände (13, 15) in das Gehäuseinnere vorstehende, ringzylindrische Lageransätze (23, 25) bilden, mit einem die Lageransätze (23, 25) axial überlappenden, über Wälzlager (29, 31) an den Lageransätzen (23, 25) drehbar gelagerten Laufrad, welches über die Wälzlager (29, 31) in dem Gehäuse (1) axial fixiert ist und mit durch zumindest einen der Lageransätze (23, 25) hindurch zugänglichen Antriebsorganen (7, 9) verbunden ist, **dadurch gekennzeichnet,** daß die Wälzlager (29, 31) in einer axial durchgehenden Nabenöffnung (27) des Laufrads (5 ; 101) angeordnet sind und die Lageransätze (23, 25) von außen umschließen und daß in die Nabenöffnung (27) zur Bildung von Sitzflächen für die Wälzlager (29, 31) Ringschalen (33, 35) eingesetzt sind, die für die

4

Antriebsverbindung axial zwischen den Wälzlagern (29, 31) nach radial innen vorstehen.

2. Radblock nach Anspruch 1, dadurch gekennzeichnet, daß die Ringschalen (33, 35) als einteilige Formteile ausgebildet sind, welche einen rohrzylindrischen, die Sitzfläche bildenden, ersten Hülsenabschnitt (37, 39) aufweisen, von dessen einem Ende ein Flanschabschnitt (41, 43) nach radial innen absteht, der an seinem Innenumfang in einen innenverzahnten zweiten Hülsenabschnitt (45, 47) übergeht.

3. Radblock nach Anspruch 2, dadurch gekennzeichnet, daß die Hülsenabschnitte (37, 39, 45, 47) in gleicher Richtung vom Flanschabschnitt (41, 43) abstehen.

4. Radblock nach Anspruch 2 oder 3, dadurch gekennzeichnet, daß der erste Hülsenabschnitt (37, 39) an seinem dem Flanschabschnitt (41, 43) abgewandten anderen Ende einen nach radial außen abstehenden Ringbund (60, 62) aufweist.

5. Radblock nach Anspruch 4, dadurch gekennzeichnet, daß im Bereich des Übergangs vom ersten Hülsenabschnitt (37, 39) in den Flanschabschnitt (41, 43) eine axial am Außenring des Wälzlagers (29, 31) anliegende Ringtreppe (59, 61) angeformt ist.

6. Radblock nach einem der Ansprüche 1 bis 5, dadurch gekennzeichnet, daß die Ringschalen (33, 35) reibschlüssig in der Nabenöffnung sitzen.

7. Radblock nach einem der Ansprüche 1 bis 6, dadurch gekennzeichnet, daß die Ringschalen (33, 35) als Blechformteile oder als Gußformteile oder als Gesenkschmiedeteile ausgebildet sind.

8. Radblock dessen Laufrad (101) axial beiderseits seines Laufflächenrings Spurkränze aufweist, nach einem der Ansprüche 1 bis 7, dadurch gekennzeichnet, daß die Wälzlager (29, 31) in einer durchgehenden Nabenöffnung (27) des Laufrads (101) sitzen und die Lageransätze (23, 25) von außen umschließen und daß das Laufrad (101) aus einem Zylinderrohrabschnitt (103) und zwei an dessen Stirnenden befestigten Ringscheiben (105, 107) besteht.

9. Radblock nach Anspruch 8, dadurch gekennzeichnet, daß die Ringscheiben (105, 107) aus vorzugsweise gehärtetem Stahl und der Zylinderrohrabschnitt (103) zumindest an seinem Außenumfang aus einem Material mit Notlaufeigenschaft besteht.

10. Radblock nach Anspruch 8 oder 9, dadurch gekennzeichnet, daß Wälzlager (29, 31) in den Ringscheiben (105, 107) sitzen und der Zylinderrohrabschnitt (103) in Ringnuten (109, 111) der Ringscheiben (105, 107) eingreift.

11. Radblock nach einem der Ansprüche 8 bis 10, dadurch gekennzeichnet, daß die Ringscheiben (105, 107) in der Nabenöffnung (27) Sitzflächen für die Wälzlager (29, 31) bilden und axial zwischen den Wälzlagern (29, 31) für die Antriebsverbindung nach radial innen vorstehende, integral angeformte Ringschalen (33, 35) tragen.

## Claims

1. A wheel unit with a housing (1) assembled from close-fitting sheet metal preforms (13, 15, 17), particularly welded preforms, the opposite side walls (13, 15) of which housing form annular bearing supports (23, 25) projecting into the inside of the housing, with a running wheel which is mounted in bearings so that it can rotate and which axially overlaps the bearing supports (23, 25) via roller bearings (29, 31) at the bearing supports (23, 25), wherein the running wheel is axially fixed in the housing (1) by means of the roller bearings (29, 31) and is connected to the available driving elements (7, 9) via at least one of the bearing supports (23, 25), characterised in that the roller bearings (29, 31) are disposed in a hub aperture (27) which passes axially through the running wheel (5 ; 101) and surround the bearing supports (23, 25) from the outside, and that annular shells (33, 35) are installed in the hub aperture (27) to form seatings for the roller bearings (29, 31), which annular shells (33, 35) project radially inwards between the roller bearings (29, 31) for the drive connection.

2. A wheel unit according to Claim 1, characterised in that the annular shells (33, 35) are formed as one-piece structural parts which have a first shell section (37, 39) in the form of a hollow cylinder which forms the seatings, from one end of which shell section (37, 39) a flange section (41, 43) projects radially inwards, which flange section (41, 43) passes over into a second shell section (45, 47) which is toothed on its internal circumference.

3. A wheel unit according to Claim 2, characterised in that the shell sections (37, 39, 45, 47) project in the same direction from the flange section (41, 43).

4. A wheel unit according to Claims 2 or 3, characterised in that the first shell section (37, 39) has an annular collar (60, 62) projecting radially outwards at its other end, opposite the flange section.

5. A wheel unit according to Claim 4, characterised in that an annular step (59, 61) which is axially adjacent to the outer collar of the roller bearing (29, 31) is formed in the flange section (41, 43).

6. A wheel unit according to any one of Claims 1 to 5, characterised in that the annular shells (33, 35) are a friction fit in the hub aperture.

7. A wheel unit according to any one of Claims 1 to 6, characterised in that the annular shells (33, 35) are constructed as sheet metal preforms or as cast preforms or as drop-forged parts.

8. A wheel unit according to any one of Claims 1 to 7 having axial wheel flanges on each side of its annular running surface, characterised in that the roller bearings (29, 31) are seated in a hub aperture (27) which passes through the running wheel (101) and surround the bearing supports (23, 25) from the outside, and that the running wheel (101) consists of a hollow cylindrical section (103) with two annular sections (105, 107) fastened to its ends.

9. A wheel unit according to Claim 8, characterised in that the annular sections (103, 105) preferably consist of hardened steel and the hollow cylindrical section (103) comprises at least at its external circumference a material with emergency running properties.

10. A wheel unit according to Claim 8 or 9, characterised in that roller bearings are seated in the annular sections (105, 107) and the hollow cylindrical section (103) engages in annular grooves (109, 111) in the annular sections (105, 107).

11. A wheel unit according to any one of Claims 8 to 10, characterised in that the annular sections (105, 107) form seatings for the roller bearings (29, 31) in the hub aperture (27) and carry integrally formed annular shells (33, 35) for the drive connection axially between the roller bearings (29, 31).

## Revendications

1. Bloc de roue, avec un carter composé de plusieurs pièces de forme (13, 15, 17) reliées rigidement ensemble, en particulier soudées, dont les parois latérales opposées (12, 15), faisant saillie à l'intérieur du carter, forment des appendices de palier (23, 25) cylindriques annulaires, avec une roue mobile, chevauchant axialement les appendices de palier (23, 25), montée tournante sur les appendices de palier (23, 35), par l'intermédiaire de paliers à roulement (29, 31), roue mobile qui est fixée axialement dans le carter (1), par l'intermédiaire des paliers à roulement (29, 31), et qui est reliée à des organes d'entraînement la traversant, en passant par au moins l'un des appendices de palier (23, 25), caractérisé en ce que les paliers à roulement (29, 31) sont disposés dans une ouverture de moyeu (27) traversante axiale de la roue mobile (5 ; 101) et entourent de l'extérieur les appendices de palier (23, 25), des coussinets annulaires (33, 35) étant insérés dans l'ouverture de moyeu (27), pour former des surfaces de siège pour les paliers à roulement (29, 31) et font saillie radialement vers l'intérieur, entre les paliers à roulement (29, 31), pour assurer la liaison d'entraînement.

2. Bloc de roue selon la revendication 1, caractérisé en ce que les coussinets annulaires (33, 35) sont réalisés sous forme de pièces de forme d'un seul tenant, qui présentent une première section de douille (37, 39) cylindrique tubulaire, formant la surface de siège, dont une extrémité forme une section de bride (41, 43) qui s'écarte radialement vers l'intérieur, en se transformant à sa périphérie intérieure en une deuxième section de douille, portant une denture intérieure.

3. Bloc de roue selon la revendication 2, caractérisé en ce que les sections de douille (37, 39, 45, 47) s'écartent dans le même sens de la section de bride (41, 43).

4. Bloc de roue selon la revendication 2 ou 3, caractérisé en ce que la première section de douille (37, 39) présente à son autre extrémité, opposée à la section de bride (41, 43), une collerette annulaire (60, 62) qui s'écarte radialement vers l'extérieur.

5. Bloc de roue selon la revendication 4, caractérisé en ce qu'un gradin annulaire (59, 61), appuyant axialement sur la bague extérieure du palier à roulement (29, 31), est formé d'un seul tenant dans la zone de la transition de la première section de douille (37, 39) à la section de bride (41, 43).

6. Bloc de roue selon l'une des revendications 1 à 5, caractérisé en ce que les coussinets annulaires (33, 35) reposent dans l'ouverture de moyeu avec une liaison par friction.

7. Bloc de roue selon l'une des revendications 1 à 6, caractérisé en ce que les coussinets annulaires (33, 35) sont réalisés sous forme de pièces de forme en tôle ou de pièces de forme moulées, ou de pièces de forme matricée.

8. Bloc de roue, dont la roue mobile (101) présente des boudins situés sur les deux côtés axiaux de sa bague de surface de roulement, selon l'une des revendications 1 à 7, caractérisé en ce que les paliers à roulement (29, 31) reposent dans une ouverture de moyeu traversante (27) de la roue mobile (101) et entourent de l'extérieur les appendices à palier (23, 25), et la roue mobile (101) se close d'une section tubulaire cylindrique (103) et de deux disques annulaires (105, 107) fixés sur leurs extrémités frontales.

9. Bloc de roue selon la revendication 8, caractérisé en ce que les disques annulaires (105, 107) sont de préférence en acier trempé et la section tubulaire cylindrique (103) est composée, au moins sur sa périphérie extérieure, d'un matériau présentant de la tenue avec un graissage insuffisant.

10. Bloc de roue selon la revendication 8 ou 9, caractérisé en ce que les paliers à roulement (29, 31) reposent dans les disques annulaires (105, 107) et la section tubulaire cylindrique (103) vient s'engager dans des gorges annulaires (109, 111) des disques annulaires (105, 107).

11. Bloc de roue selon l'une des revendications 8 à 10, caractérisé en ce que les disques annulaires (105, 107) forment, dans l'ouverture de moyeu (27), des surfaces de siège pour les paliers à roulement (29, 31) et portent axialement, entre les paliers à roulement (29, 31), des coussinets annulaires (33, 35), formés d'une seule pièce, faisant saillie radialement vers l'intérieur, pour la liaison d'entraînement.

EP 0 319 039 B1

**FIG.1**

**FIG.2**

**FIG.3**